# EUROPÄISCHE PATENTSCHRIFT

(11) **EP 1 962 410 B1**
(45) Veröffentlichungstag und Bekanntmachung des Hinweises auf die Patenterteilung: **17.07.2013**
(21) Anmeldenummer: 07003921.9
(22) Anmeldetag: 26.02.2007
(51) Int. Cl.: H02K 15/02

(54) **Heiz- und Temperaturüberwachungssystem zum Aufschrumpfen einer Läuferkappe auf einen Läufer**
Heating and temperature surveillance system to shrink-fit a rotor cover on a rotor
Système de surveillance de température et de chauffage pour emmancher le capot d'extrémité du rotor sur un rotor

(43) Veröffentlichungstag der Anmeldung: 27.08.2008
(73) Patentinhaber: Siemens Aktiengesellschaft, 80333 München (DE)
(72) Erfinder: Kretschmer, Michael, 52072 Aachen (DE); Masuch, Christian, 41464 Neuss (DE); Weissmann, Peter, 46284 Dorsten (DE); Widlitzki, Heiko, 46047 Oberhausen (DE)

(56) Entgegenhaltungen:
- WO-A-98/42061
- DE-A1- 1 538 750
- DE-B- 1 141 021
- DE-B- 1 188 710
- DE-U1- 8 615 847
- US-A1- 2003 000 945

## Beschreibung

Die Erfindung betrifft ein Heiz- und Temperaturüberwachungssystem zum Aufschrumpfen einer Läuferkappe auf einen Läufer gemäß Anspruch 1.

Ein Turbogenerator umfasst im Wesentlichen zwei Maschinenkomponenten, wovon die eine als Stator und die andere als Läufer bezeichnet wird. Der Läufer ist im Stator drehbar angeordnet, wobei dieser aus verschiedenen Einzelkomponenten besteht. So weist der Läufer beispielsweise einen Rotor mit einer Erregerwicklung auf. Im Gegensatz zum Stator wird der Läufer aus mechanischen Gründen nicht lamelliert ausgeführt, denn die Drehzahlen, bei denen ein Läufer üblicherweise betrieben wird, liegen bei über 1500 U/min bzw. 3000 U/min. Daher werden die Läufer, insbesondere für zweipolige Turbogeneratoren mit 3000 U/min (3600 U/min) ausschließlich mit massiven Läuferballen gebaut. Die Läuferballen werden aus einem einteiligen Schmiedestück hoher Festigkeit und Bruchzähigkeit, welches in Vakuumguss hergestellt wird, ausgearbeitet. Damit die Leiter in den Turbogeneratoren in den Nuten gehalten werden, werden diese mit massiven Keilen aus Stahl oder Bronze in den Nuten gehalten. Ein Halten der Leiter in den Nuten ist erforderlich, denn die Zentrifugalkräfte sind vergleichsweise hoch. Des Weiteren werden die Läufer für Turbogeneratoren mit Läuferkappen versehen. Die Läuferkappen sind die am stärksten beanspruchten Elemente des Läufers.

Bei der Herstellung des Läufers werden die Läuferkappen erwärmt, so dass der Durchmesser der Läuferkappen größer ist als der Außendurchmesser des Läufers. Die Läuferkappe wird über den Läufer gestülpt und auf diesem infolge gleichmäßiger Abkühlung aufgeschrumpft.

Die Erwärmung der Läuferkappe und die Temperaturerfassung erfolgt momentan per Hand. Das bedeutet, dass die Erwärmung der Läuferkappe vorzugsweise durch erfahrene Mitarbeiter durchgeführt werden muss, da die Läuferkappen gleichmäßig, sowohl in der Mitte als auch an den Enden, aufgewärmt werden sollten. Üblicherweise wird die Temperaturmessung mittels eines Handmessgerätes durchgeführt, wodurch eine Überwachung bzw. Steuerung der Läuferkappe während des Aufschrumpfens nicht möglich ist.

In der DE 1 188 710 wird eine elektrische Maschine mit einer die Stirnverbindungen der in Nuten im Läufer untergebrachten Leiter abstützenden aufgeschrumpften Kuppe.

Die DE 1 141 021 offenbart eine Sicherungseinrichtung für die Läuferwickelköpfe schnell laufender elektrischer Maschinen.

Wünschenswert wäre eine gleichmäßige Verteilung der Temperaturerhöhung auf der Läuferkappe.

Es ist Aufgabe der Erfindung, ein Heiz- und Temperaturüberwachungssystem anzugeben, das zum Aufschrumpfen einer Läuferkappe auf einen Läufer geeignet ist.

Diese Aufgabe wird durch ein Heiz- und Temperaturüberwachungssystem zum Aufschrumpfen einer Läuferkappe gemäß Anspruch 1 gelöst.

Die Erfindung hat unter anderem den Vorteil, dass nun eine kontrollierte Erwärmung der Läuferkappe möglich ist, denn mit der Steuerungseinheit wird sichergestellt, dass das Heizmittel eine definierte Wärmeenergie auf die Läuferkappe überträgt, was durch die Erfassung der Temperatur der Läuferkappe mittels eines Temperaturerfassungsmittels sichergestellt ist. Es ist ein Aspekt der Erfindung, dass verhindert werden kann, dass die Läuferkappe an verschiedenen Stellen zu warm wird, indem eine gezielte Steuerung der Temperatur erfolgt. Für diese Steuerung ist die Steuerungseinheit verantwortlich, die als Eingangsgröße die von dem Temperaturerfassungsmittel er - mittelten Temperaturen verarbeitet und ein Ausgangssignal an das Heizmittel sendet, wodurch die Wärmemenge auf die Läuferkappe übertragen wird.

Erfindungsgemäß wird verhindert, dass beim Auf- bzw. Abschrumpfen der Läuferkappe eine bestimmte Temperatur von bspw. 350°C nicht überschritten wird. Durch das Überschreiten dieser Grenztemperatur kann die Läuferkappe zerstört werden.

Das Heizmittel umfasst Induktionsspulen.

Durch den Einsatz von Induktionsspulen wird eine vergleichsweise einfache Möglichkeit angeboten, eine definierte Wärmemenge auf die Läuferkappe zu übertragen. Die übertragene Wärmemenge hängt von der Stromstärke in den Induktionsspulen ab und kann durch die Steuerungseinheit präzise eingestellt werden.

Das Heizmittel wird am Läuferkappenschrumpfsitz, in der Läuferkappenmitte und im Bereich des Einsatzringes angeordnet.

Durch diese Maßnahme ist es möglich, die Läuferkappe gleichmäßig zu erwärmen, was sehr wichtig ist, denn eine ungleichmäßige Erwärmung könnte einen Schaden während des Aufschrumpfens der Läuferkappe auf den Läufer hervorrufen.

Die Induktionsspulen sind zumindest einmal um die Läuferkappe gewickelt.

Dadurch ist es möglich, die übertragene Wärmemenge gleichmä-βig auf dem Umfang der Läuferkappe zu verteilen. Zweckdienlicherweise sollten die Induktionsspulen mehrfach um die Läuferkappe gewickelt werden, was zu einer verbesserten Wärmeübertragung auf die Läuferkappe führt.

Vorzugsweise umfasst das Temperaturerfassungsmittel ein Pyrometer.

Der Einsatz eines Pyrometers hat den Vorteil, dass eine Messung schnell und in einem großen Messbereich möglich ist. Darüber hinaus erfolgt die Temperaturmessung nahezu ohne Verschleiß. Des Weiteren zeigen Pyrometer den Vorteil, dass sie auch bei hohen Spannungen, elektromagnetischen Feldern oder aggressiven Materialien hervorragend eingesetzt werden können. Daher ist der Einsatz von Pyrometern bei diesem Heiz - und Temperaturüberwachungssystem vorteilhaft.

Das Temperaturerfassungsmittel ist zwischen zwei Heizmitteln angeordnet.

Dadurch ist eine präzise Messung der Temperatur der Läuferkappe möglich. Darüber hinaus wird einer Überhitzung der Läuferkappe vorgebeugt, da die höchsten Temperaturen naturgemäß zwischen zwei Heizmitteln zu erwarten sind.

Vorzugsweise umfasst das Heiz- und Temperaturüberwachungssystem eine Lichtleiterfaser, wovon ein Ende an der Läuferkappe und das andere Ende am Pyrometer angeordnet ist.

Dies hat den Vorteil, dass ein Pyrometer nicht in unmittelbarer Umgebung der Läuferkappe angeordnet werden muss. Es ist vielmehr möglich, an der Stelle, an der die Temperatur der Läuferkappe gemessen werden soll, eine Lichtleiterfaser anzuordnen, die das erfasste Licht von der Läuferkappe zum Pyrometer weiterleitet.

In einer weiteren vorteilhaften Ausgestaltung der Erfindung ist ein Klemmstück zum Aufnehmen der Lichtleiterfaser vorgesehen.

Für eine Temperaturmessung ist es erforderlich, dass der Temperaturfühler, der in diesem Fall durch das eine Ende der Lichtleiterfaser gebildet ist, stabil und ortsfest an der zu messenden Stelle angebracht wird. Durch ein Klemmstück, das zum Aufnehmen der Lichtleiterfaser ausgebildet ist, wird dies sichergestellt, so dass eine verlässliche Temperaturmessung möglich ist.

Vorzugsweise ist das Klemmstück zwischen zwei Induktionspulen angeordnet, wodurch eine erhöhte mechanische Stabilität erreicht wird.

Vorzugsweise weist das Klemmstück eine durchgängige Bohrung zum Aufnehmen der Lichtleiterfaser auf.

Dadurch ist es möglich, dass das eine Ende der Lichtleiterfaser einfach und stabil in der Nähe der Läuferkappe angeordnet werden kann.

In einer weiteren vorteilhaften Ausführungsform weist das Klemmstück zwei Tragflanken zum Aufnehmen der Induktionsspulen auf, wobei die Bohrung zwischen den beiden Tragflanken angeordnet ist.

Dadurch erreicht man den Vorteil, dass das Temperaturerfassungsmittel sehr stabil und ortsfest an der Läuferkappe angeordnet werden kann. Außerdem ist der thermische Kontakt zwischen den Induktionspulen und dem Temperaturerfassungsmittel dadurch am größten.

Die Erfindung wird anhand der in den Figuren dargestellten Ausführungsbeispiele näher erläutert.

Es zeigen:
- Figur 1: eine perspektivische Teilansicht eines Läufers,
- Figur 2: eine Draufsicht auf ein Heizmittel mit Temperaturerfassungsmittel,
- Figur 3: eine perspektivische Querschnittsansicht durch das Temperaturerfassungs- und Heizmittel,
- Figur 4: eine perspektivische Darstellung eines Klemmstücks.

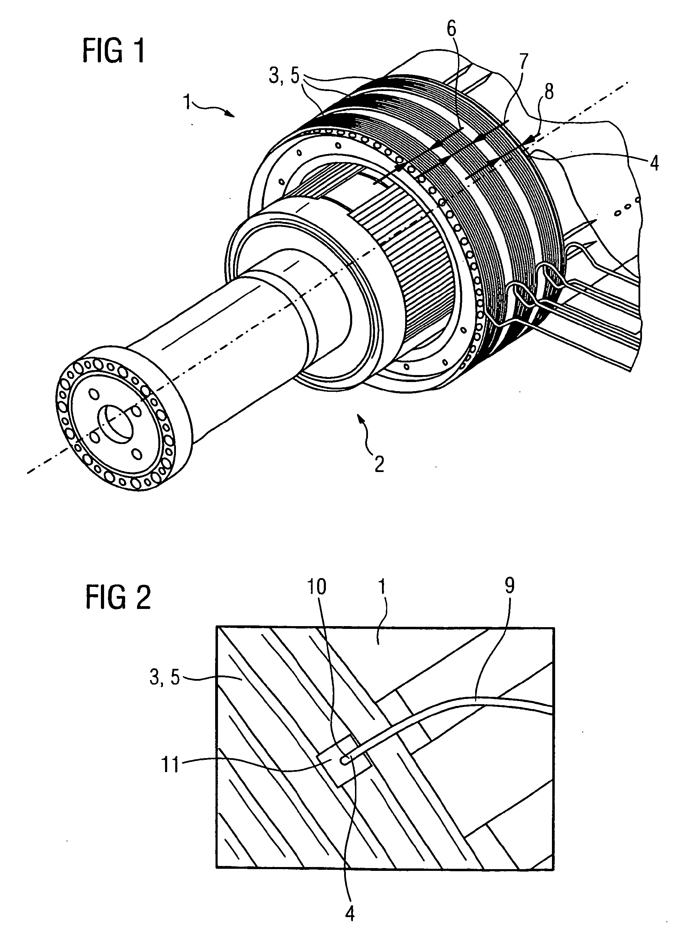

In der Figur 1 ist ein Läufer 1 eines nicht näher dargestellten Turbogenerators zu sehen. Der Läufer 1 umfasst eine Läuferkappe 2, die rotationssymmetrisch um den Läufer 1 angeordnet ist. Der Läufer 1 umfasst nicht näher dargestellte Leiter auf.

Zum Aufschrumpfen der Läuferkappe 2 auf den Läufer 1 ist ein Heiz- und Temperaturüberwachungssystem zum Aufschrumpfen einer Läuferkappe 2 auf den Läufer 1 vorgesehen, umfassend ein Heizmittel 3 zum Beheizen der Läuferkappe 2, einem Temperaturerfassungsmittel 4 zum Erfassen der Temperatur der Läuferkappe 2 und einer nicht näher dargestellten Steuerungseinheit zum Steuern der Erwärmung der Läuferkappe 2, wobei die Steuerungseinheit einen mit dem Temperaturerfassungsmittel 4 verbundenen Eingang und einen mit dem Heizmittel 3 verbundenen Ausgang aufweist.

Die Heizmittel 3 umfassen Induktionsspulen 5, die zumindest einmal um die Läuferkappe 2 gewickelt sind.

Die Induktionsspulen 5 sind zum Aufbringen am Läuferkappenschrumpfsitz 6, in der Läuferkappenmitte 7 und im Bereich des Einsatzringes 8 vorgesehen.

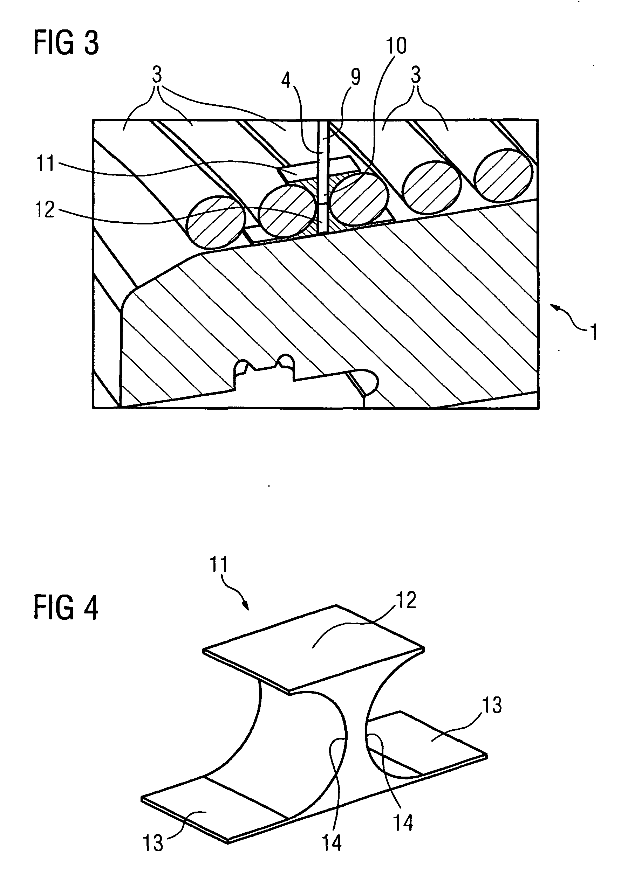

Das Temperaturerfassungsmittel 4 umfasst ein nicht näher dargestellten Pyrometer, der mit der Steuerungseinheit verbunden ist. Das Temperaturerfassungsmittel 4 ist zwischen zwei Heizmitteln 3 angeordnet, was in den Figuren 2 und 3 deutlich gemacht ist.

Das Temperaturerfassungsmittel 4 weist eine Lichtleiterfaser 9 auf, wovon ein Ende 10 an der Läuferkappe 2 und das andere Ende am Pyrometer angeordnet ist.

Des Weiteren ist ein Klemmstück 11 zum Aufnehmen der Lichtleiterfaser 9 vorgesehen. Das Klemmstück 11 wird hierbei zwischen zwei Induktionsspulen 5 angeordnet. Zur Aufnahme der Lichtleiterfaser 9 weist das Klemmstück 11 eine durchgehende Bohrung 12 auf. Das Klemmstück 11 ist, wie aus Figur 4 ersichtlich, im wesentlichen Doppel-T-trägerförmig ausgebildet und weist daher zwei Tragflanken 13 auf, die zum Aufnehmen der Induktionsspulen 5 ausgebildet sind. Das Klemmstück 11 weist daher zwei halbrunde Öffnungen 14 auf, die einen Durchmesser aufweisen, der im Wesentlichen demselben Außendurchmesser der Induktionsspulen 5 entspricht. Aus der Figur 3 ist ersichtlich, dass der Außendurchmesser der Induktionsspulen 5 einen ähnlichen Durchmesser aufweist wie die beiden halbrunden Öffnungen 14.

Die Bohrung 12 ist zwischen den beiden Tragflanken 13 angeordnet und verläuft durchgehend durch das Klemmstück 11, was dazu führt, dass die Oberfläche der Läuferkappe 2 in einer sozusagen optischen Verbindung zu einer Lichtleiterfaser 9 und dadurch zu einem Pyrometer steht.

## Patentansprüche

1. Heiz- und Temperaturüberwachungssystem zum Aufschrumpfen einer Läuferkappe (2) auf einen Läufer (1),
umfassend ein Heizmittel (3) zum Beheizen der Läuferkappe (2), ein Temperaturerfassungsmittel (4) zum Erfassen der Temperatur der Läuferkappe (2) und einer Steuerungseinheit zum Steuern der Erwärmung der Läuferkappe (2),
wobei die Heizmittel (3) zum Aufbringen am Läuferkappenschrumpfsitz (6), in der Läuferkappenmitte (7) und im Bereich des Einsatzringes (8) vorgesehen sind,
wobei die Steuerungseinheit einen mit dem Temperaturerfassungsmittel (4) verbundenen Eingang und einen mit dem Heizmittel (3) verbundenen Ausgang aufweist,
wobei das Heizmittel (3) Induktionsspulen (5) umfasst, wobei das Temperaturerfassungsmittel (4) zwischen zwei Heizmitteln (3) angeordnet ist,
wobei die Induktionsspulen (5) zumindest einmal in der Läuferkappenmitte und im Bereich des Einsatzringes um die Läuferkappe (2) gewickelt sind.

2. Heiz- und Temperaturüberwachungssystem nach Anspruch 1,
wobei das Temperaturerfassungsmittel (4) ein Pyrometer umfasst.

3. Heiz- und Temperaturüberwachungssystem nach Anspruch 2, wobei eine Lichtleiterfaser (9) vorgesehen ist,
wovon ein Ende (10) an der Läuferkappe (2) und das andere Ende am Pyrometer angeordnet ist.

4. Heiz- und Temperaturüberwachungssystem nach Anspruch 3, wobei ein Klemmstück (11) zum Aufnehmen der Lichtleiterfaser (9) vorgesehen ist.

5. Heiz- und Temperaturüberwachungssystem nach Anspruch 4, wobei das Klemmstück (11) zwischen zwei Induktionsspulen (5) angeordnet ist.

6. Heiz- und Temperaturüberwachungssystem nach Anspruch 4 oder 5,
wobei das Klemmstück (11) eine durchgehende Bohrung (12) zum Aufnehmen der Lichtleiterfaser (9) aufweist.

7. Heiz- und Temperaturüberwachungssystem nach Anspruch 4, 5 oder 6,
wobei das Klemmstück (11) zwei Tragflanken (13) zum Aufnehmen der Induktionsspulen (5) aufweist und die Bohrung (12) zwischen den beiden Tragflanken (13) angeordnet ist.

## Claims

1. Heat- and temperature-monitoring system for shrink-fitting a rotor cap (2) on a rotor (1), comprising a heating means (3) for heating the rotor cap (2), a temperature-detection means (4) for detecting the temperature of the rotor cap (2) and a control unit for controlling the heating of the rotor cap (2), wherein the heating means (3) are intended to be fitted on the rotor cap shrink-fit seat (6), in the rotor cap centre (7) and in the region of the insert ring (8), wherein the control unit has an input, which is connected to the temperature-detection means (4), and an output, which is connected to the heating means (3), wherein the heating means (3) comprises induction coils (5), wherein the temperature detection means (4) is arranged between two heating means (3), wherein the induction coils (5) are wound around the rotor cap (2) at least once in the rotor cap centre and in the region of the insert ring.

2. Heat- and temperature-monitoring system according to Claim 1, wherein the temperature-detection means (4) comprises a pyrometer.

3. Heat- and temperature-monitoring system according to Claim 2, wherein a light guide fibre (9) is provided, one end (10) of which is arranged on the rotor cap (2) and the other end of which is arranged on the pyrometer.

4. Heat- and temperature-monitoring system according to Claim 3, wherein a clamping piece (11) is provided for holding the light guide fibre (9).

5. Heat- and temperature-monitoring system according to Claim 4, wherein the clamping piece (11) is arranged between two induction coils (5).

6. Heat- and temperature-monitoring system according to Claim 4 or 5, wherein the clamping piece (11) has a continuous hole (12) for holding the light guide fibre (9).

7. Heat- and temperature-monitoring system according to Claim 4, 5 or 6, wherein the clamping piece (11) has two supporting flanks (13) for holding the induction coils (5), and the hole (12) is arranged between the two supporting flanks (13).

## Revendications

1. Système de contrôle du chauffage et de la température pour le frettage d'un capot ( 2 ) de rotor sur un rotor ( 1 ),
comprenant un moyen ( 3 ) de chauffage pour le chauffage du capot ( 2 ) de rotor, un moyen ( 4 ) de détection de la température pour la détection de la température du capot ( 2 ) du rotor et une unité de commande pour la commande du chauffage du capot ( 2 ) du rotor,
dans lequel les moyens ( 3 ) de chauffage sont prévus pour être mis sur le siège ( 6 ) de frettage du capot du rotor, dans le milieu ( 7 ) du capot du rotor et dans la zone de l'anneau ( 8 ) d'insertion,
l'unité de commande ayant une entrée reliée au moyen ( 4 ) de détection de la température et une sortie reliée au moyen ( 3 ) de chauffage,
dans lequel le moyen ( 3 ) de chauffage comprend des bobines ( 5 ) d'induction, le moyen ( 4 ) de détection de la température étant disposé entre deux moyens ( 3 ) de chauffage,
les bobines ( 5 ) d'induction étant enroulées autour du capot ( 2 ) du rotor au moins une fois dans le milieu du capot du rotor et dans la zone de l'anneau d'insertion.

2. Système de contrôle du chauffage et de la température suivant la revendication 1,
dans lequel le moyen ( 4 ) de détection de la température comprend un pyromètre.

3. Système de contrôle du chauffage et de la température suivant la revendication 2,
dans lequel il est prévu une fibre ( 9 ) optique,
dont une extrémité est disposée sur le capot ( 2 ) du rotor et dont l'autre extrémité est disposée sur le pyromètre.

4. Système de contrôle du chauffage et de la température suivant la revendication 3,
dans lequel une pièce ( 11 ) de serrage est prévue pour la réception de la fibre ( 9 ) optique.

5. Système de contrôle du chauffage et de la température suivant la revendication 4,
dans lequel la pièce ( 11 ) de serrage est disposée entre deux bobines ( 5 ) d'induction.

6. Système de contrôle du chauffage et de la température suivant la revendication 4 ou 5,
dans lequel la pièce ( 11 ) de serrage a un trou ( 12 ) traversant pour la réception de la fibre ( 9 ) optique.

7. Système de contrôle du chauffage et de la température suivant la revendication 4, 5 ou 6,
dans lequel la pièce ( 11 ) de serrage a deux flancs ( 13 ) porteurs pour la réception des bobines ( 5 ) d'induction et le trou ( 12 ) est disposé entre les deux flancs ( 13 ) porteurs.
